# EUROPEAN PATENT SPECIFICATION

(11) **EP 3 103 945 B1**
(45) Date of publication and mention of the grant of the patent: **12.09.2018**
(21) Application number: 15176045.1
(22) Date of filing: 09.07.2015
(51) Int. Cl.: E05B 51/02, E05C 17/20, E05C 17/00, E05B 47/00

(54) **VEHICLE DOOR CHECK**
FAHRZEUGTÜRFESTSTELLER
FREIN DE PORTIÈRE DE VÉHICULE

(30) Priority: 10.06.2015 EP 15171521
(43) Date of publication of application: 14.12.2016
(73) Proprietor: HELLA GmbH & Co. KGaA, 59552 Lippstadt (DE)
(72) Inventor: KIRCHHOFF, Friedhelm, 59552 Lippstadt (DE)
(74) Representative: Jöstingmeier, Martin

(56) References cited:
- EP-A1- 0 474 918
- EP-A2- 0 911 471
- WO-A1-2015/048876
- DE-A1-102009 053 938
- DE-A1-102013 014 845
- JP-A- S61 191 782

## Description

### Field of the invention

The invention relates to a door check for vehicle doors, e.g. car doors. The door check comprises as usual a door strap for being mounted to the chassis or the door. The door strap is received by a retainer for being mounted to the door or the chassis, respectively. The door strap is movably supported by the retainer enabling a movement of the door strap relative to the retainer at least in the longitudinal direction of the door strap. The retainer comprises a cylinder with a piston, the latter being pressed against the door strap to provide friction slowing down a movement of the door strap relative to the retainer.

### Description of the related art

When opening a car door, the movement of the door has to be stopped at last when the maximum opening angle of the door hinges is reached. In most cases the space to the left or right of the car, respectively is not sufficient to fully open the door. The door is likely to be slammed against neighbored cars, garage walls or the like. To avoid damages, car doors are equipped with door checks. The door checks mostly provide multiple defined opening angles. A person opening the door opens the door in increments until he or she expects the door to hit an obstacle if the opening angle is further increased.

EP 1 951 977 B1 discloses an example for a vehicle door check. The door check comprises a retainer with an essentially U-shaped linear bearing supporting a door strap. The door strap is pressed by a spring loaded piston into the U-shaped linear bearing to thereby provide friction slowing the swinging door down. The door strap is an essentially elongate slider with increasing thickness towards its mechanical end stop to thereby adapt the friction. However, this door check shows a significant slip stick effect due to the initial breakaway torque.

DE 10 2009 053 938 A discloses a vehicle door hinge for a rear door of a vehicle. The door hinge can be blocked in its open position by means of a control pin. WO 2015/058876 A1 relates to a vehicle check having a check arm being mounted to the vehicle body. A check arm holder is configured to apply different amounts of braking force to the check arm. The check arm holder comprises a motor being configured to drive brake member via worm gear to thereby adjust the friction between the brake members and the check arm.

JP 61-191782, EP 0911471 A2 and EP 0 474 918 A1 as well disclose a door check having a check arm being clamped by adjustable brake members.

There have been attempts to reduce the slip stick effect, e.g. by using viscous type dampers with magnetorheological fluids. Another approach is provided by DE 10 2013 014 845 A1: The door strap is clamped between an abutment and a brake shoe (or two brake shoes) with a lining. The brake shoe is spring loaded by a disk spring against the door strap. To reduce the slip stick effect a linear actuator lifts off the brake shoe and thus the lining to at least reduce the friction between the lining and the door strap and thus the initial breakaway torque.

Other means for braking a door strap are disclosed e.g. in DE 103 20 138 B4 and WO 2008/100233 A2

### Summary of the invention

The problem to be solved by the invention is to provide a simple door check, in particular for vehicle doors enabling to actively control enabling or disabling movement of the door and that provides a fail safe mode.

This problem is solved by the door check of claim 1. The dependent claims relate to further improvements of the invention.

The door check comprises at least a door strap. The door strap may be an elongate bar or rod for connecting the chassis of the car with a retainer. The door strap could be referred to as connection bar or connection rod. The door strap may be hinged to the chassis or comprise a hinge for mounting the door strap to the chassis and comprise at least one sliding surface. The door strap may have a constant diameter and/or thickness at least in the section having the sliding surface. In particular in case the door is a trunk door, i.e. a tailgate, the door strap may be bent, e.g. a curved rod or bar.

A retainer for being mounted to a vehicle door movably supports the door strap. For example, the retainer may provide an e.g. linear bearing enabling at least a linear movement of the door strap along the longitudinal axis of the door strap.

The retainer comprises at least one cylinder with a cylinder axis, a cylinder bottom and an opposed cylinder opening. The cylinder accommodates a piston, the latter being movably in the cylinder along the cylinder axis. The piston may be considered as a slider being movably supported by the cylinder. The piston is be spring loaded to transmit a force to the door strap thereby creating a frictional force opposite to the movement of the door strap. For example, a lining may be attached to the piston at its door strap facing side. Pushing the piston through the cylinder opening against the door strap (more precisely against a sliding surface of the door strap) thus causes a frictional force opposite to an eventual movement of the door strap relative to the retainer and thus opposite to a corresponding movement of the door. The frictional force thus slows the door down.

Briefly, the door check comprises a door strap for being mounted to the chassis and a retainer for being mounted to the door and providing a bearing for movably supporting the door strap relative to the retainer. The retainer comprises a cylinder supporting a piston which is spring loaded against the door strap. It further comprises an actuator, configured to augment the pressure in the cylinder upon demand to thereby augment the friction between the piston and the door strap.

Preferably, the retainer comprises a retaining plate for supporting the door strap. A lining or sliding pad may be attached to the door strap facing side of the retaining plate. The door strap may be positioned between the piston and the retaining plate and in contact with both to provide a frictional force in case the door strap is moved relative to the retainer. The retaining plate so to speak provides an abutment for the force exerted by the piston on the door strap.

The retainer and the piston (with the optional friction pads) may provide a linear bearing for the door strap.

Said spring loading of the piston towards the door strap can be obtained by providing at least one spring in the cylinder between the piston and the cylinder bottom. The spring may use the optional cylinder bottom as abutment and/or the cylinder may for example comprise a rim or a step wise reduced diameter providing an abutment for the spring. Alternatively or additionally, a spring may be positioned outside the cylinder. Said spring may apply a force to a plunger, thereby pressurizing a fluid inside the cylinder and thus pressing the piston towards the door strap. In practice, the traveling path of the piston may almost be neglectable, because the piston can be in constant, i.e. permanent contact with the door strap, only wear has to be compensated by the traveling path. As the traveling path of the piston is typically rather short, the ratio of the effective plunger surface and the effective piston surface may be chosen to amplify the force transmitted via the piston to the door strap, i.e. the effective surface Aₚₗ of the plunger may be smaller than the effective surface Aₚᵢ of the piston, e.g. a ½, a ¼ of the effective surface of the piston or even less). A significant advantage of the obtained hydraulic amplification of the spring load to the piston is that the weight of the retainer may be significantly reduced, for example because the spring can be much lighter.

Only to avoid ambiguities, the effective surface Aₚₗ, Aₚᵢ of a piston or said plunger is the surface that is obtained by dividing the change of the fluid volume *V* inside the cylinder by the length *l* of the traveling path of the piston or plunger, respectively to obtain said volume change, in the limit of infinitesimal changes the A= d*V*/d*l.* In case the piston or the plunger, respectively has a plane end face being orthogonal to the direction of movement, the surface of the end face is the effective surface.

A controllable actuator is coupled by coupling means to the piston. The actuator enables to exert and/or increase the force exerted via the piston to the door strap and thus the friction. The actuator may thus apply an additional force in the direction of the door strap to the piston. The force provided by the actuator enables to augment the friction, e.g. to block any movement of the door strap and thus the door on demand. The door strap may by literally clamped by the piston or between the piston and the retaining plate to thereby inhibit any movement of the door. In a particular example, a sensor monitors the space remaining besides a door and provides the information to a controller. The controller may activate the actuator to increase the force applied by (or via) said piston to the door strap in case the door will hit an obstacle if further opened. Accordingly said controller thereby slows the door strap and thus the door down until the movement stops. Another application is to block the door strap by applying a corresponding force via the actuator and the piston to the door strap and thus the door at a selected opening angle to enable use of the door as help for getting in or out of the car. The blocked door so to speak can be used as boarding aid, the blocked door converts into a handrail.

Preferably, the coupling means bypass the spring. Thereby, the force provided by the actuator is only an additional force added to the force provided by the spring. This reduces the load of the electrical system of the car for blocking the door strap.

Due to the combination of said at least one spring and an actuator, the door is slowed down even in case the actuator or its controller fails. Further, in normal operation the actuator may be switched off, thereby reducing the load of the electrical system of the car. The friction provided by the force exerted by the spring may be sufficient to slow the door down under normal operation.

For example, a plunger may transmit the additional force provided by the actuator to the piston. Preferably, the plunger is aligned with the cylinder axis and may be coaxially with the spring (if provided), this eases manufacture and enables to reduce the dimensions of the retainer.

The plunger may be in direct contact with the piston, in this case the plunger may resemble a slab or a push rod. But in a particularly preferred embodiment, the plunger only reduces the volume between the piston and the cylinder bottom if moved (further) inside the cylinder, e.g. towards the piston, i.e. the plunger is not directly connected to the piston. The fluid inside the cylinder, i.e. between the piston and the cylinder bottom (e.g. air, a hydraulic oil or the like) is pressurized by advancing the plunger into the cylinder and the force which is applied to the plunger is transmitted to the piston via the fluid pressure. The piston thus 'clamps' the door strap. In other words, the cylinder volume may be filled with a fluid and activation of the actuator augments and/or reduces the fluid pressure (depending on the direction), thereby augmenting and/or reducing, respectively, the force via the piston to the door strap. This force may be applied directly or via some force transmitting means.

In this example as in the whole application, the plunger is in fact a further (master) piston, and only to distinguish between the further piston and the (first) piston, i.e. to avoid ambiguities the term plunger is used. The term plunger thus enables to distinguish the further piston for pressurizing the fluid from the (first) piston being pushed against the door strap. The term 'plunger' could thus be replaced by the term 'further piston' or 'master piston'.

The surface of the plunger's end face (more precisely its orthogonal projection along the plunger's axis of movement) may be significantly smaller that the piston's end face to thereby augment the force transmitted via the piston to the door strap. This is as well referred to as hydraulic amplification. For example, the effective surface *Aₚₗ* of the plunger's end face may be smaller than the corresponding surface *Aₚᵢ* of the piston, e.g. ½, ¼, preferably ⅛ or even smaller ¹/₁₀ of the corresponding surface of the piston (*Aₚₗ ≤* ½·*Aₚᵢ, Aₚₗ ≤ ¼*·*Aₚᵢ,* preferably *Aₚₗ ≤*⅛·*Aₚᵢ* or even *Aₚₗ ≤¹*/*₁₀*·*Aₚᵢ*). The traveling path of the piston would be augmented accordingly in case the piston moves, but as the cylinder preferably slides over the door strap, there is no traveling path of the piston if the fluid has a low compressibility (provided the thickness of the corresponding section of the door strap is constant and wear is low) and the drawback of an augmented traveling path of the plunger is thus not existent in case the door strap has a constant cross section. Accordingly, the fluid is preferably incompressible or has a low compressibility.

The plunger thus may engage into a complementary, so called further opening of the cylinder, e.g. of the cylinder bottom or a cylinder wall. Pushing the plunger into the cylinder augments the fluid pressure and thus the force applied by the piston to the door strap. Releasing the plunger reduces the pressure and only the (optional) spring load remains on the piston. The plunger is thus preferably movably supported by the complementary further opening of the cylinder. The slit between the plunger and the cylinder is preferably at least almost fluid tight. The further opening may provide a linear bearing for the plunger enabling an axial movement of the plunger. Preferably the plunger axis and cylinder axis are parallel or identical.

The actuator may comprise a coil and a linearly movable armature wherein a current through said coil exerts a force on the armature which is transmitted by said coupling means to the piston. The force may be a reluctance force. As explained above the coupling means may comprise a plunger and a fluid, the plunger being driven by the actuator and configured to pressurize the fluid.

Preferably, the armature is coupled to the plunger. For example, the plunger can be a protrusion e.g. a pin or a trunnion of the armature. This is very simple but efficient, in particular, if the further cylinder opening provides a linear bearing for the plunger thereby supporting the armature as well.

Preferably, a coupling plate is positioned at the end of the armature facing away from the piston. The coupling plate may be of a magnetic material to enhance the magnetic force applied to the piston (if energized). Further, the coupling plate may extend over the coil's respective front facing side, to enhance the magnetic force. In a particular preferred embodiment a booster spring may be positioned between the coupling plate and a booster housing's abutment plate, to thereby spring load the armature towards the piston. This measure as well enhances the force applied to the piston and reduces rattling of the armature, the piston and/or the door strap. As already suggested above, this measure even enables to omit a spring in the cylinder (and/or an actuator), in particular if the force of the booster spring is applied via a plunger to pressurize the fluid. Due to the possibility of the above explained hydraulic amplification of the force finally transmitted by the piston to the door strap the booster spring can be much lighter than a spring acting directly on the piston. Thus even in case of a purely mechanical door check, i.e. without actuator, the weight of the retainer can be reduced by about 250gr, compared to the solution as suggested in EP 1 951 977 B1. Briefly, such door check would comprise and a retainer for being be mounted to a vehicle door, wherein the retainer movably supports the door strap and enables a movement of the door strap relative to the retainer along the longitudinal axis of the door strap. The retainer further comprises at least a cylinder with a cylinder axis, a cylinder bottom and an opposed cylinder opening. A piston is movably supported in the cylinder along the cylinder axis. A spring loaded plunger pressurizes a fluid inside the cylinder and thereby applies a force via the piston to the door strap. The effective surface of the plunger should be smaller than the effective surface of the piston. For example, the plunger may be movably supported in a further opening of the cylinder and said opening may have a smaller diameter than the cylinder and the piston. The plunger thus has the same function as a piston in a master cylinder. The plunger not necessarily needs to be arranged in the further opening of the cylinder, the plunger could be as well pressurize a fluid in a further cylinder, the latter being in fluid communication with cylinder of the retainer.

The abutment plate is preferably releasable connected to the booster housing. Thus, the booster housing and the actuator housing, e.g. a solenoid housing may be a single part. The coil, the armature, the coupling plate and the booster spring may each be inserted into the housing via the opening to be closed by fixing the abutment plate. For example the abutment plate may be clamped or press fitted into an axial opening of the booster housing.

In most of the above examples it has been assumed that the actuator is a solenoid drive, but other types of actuators can of be used as well to apply a force via the piston to the door strap. For example, the plunger could be coupled to a piezo actuator, e.g. a stack of piezo materials, a piezo motor, or a usual motor rotating a threaded plunger in a threaded further opening of the cylinder to thereby push the plunger into the cylinder or retract it, depending on the direction of the rotation.

Particularly preferred, the plunger is coupled to a piezo actuator, e.g. said piezo stack. Briefly, the piezo actuator forces the plunger into the cylinder upon activation to thereby pressurized the fluid. In this case the effective surface *Aₚₗ* of the plunger's end face is preferably bigger than the corresponding surface *Aₚᵢ* of the piston, e.g. ½, ¼, preferably ⅛ or even bigger ¹/₁₀ of the corresponding surface of the piston (½ *Aₚₗ ≥A_{pi,} ¼ Aₚₗ ≥Aₚᵢ,* preferably ⅛*Aₚₗ ≥Aₚᵢ* or even ¹/₁₀ *Aₚₗ ≥Aₚᵢ*). Thereby, a reduction of the force is obtained but the traveling path of the piston is augmented to compensate for the small traveling path of the plunger when applying a voltage to the piezo. The piezo actuator driven retainer has a particular low weight and a low energy consumption. In a preferred example, the piezo may be spring loaded towards the plunger to thereby compensate for wear of the friction pads. Alternatively or additionally, the distance between the abutment of the piezo and the fluid facing end face of the plunger may be adjustable; for example the abutment may be movable, thereby enabling to adjust (or close) the gap between the piston the door strap or their respective optional linings or friction pads. For example an adjustment bolt may be provided for pushing the abutment towards the cylinder, thereby closing an eventual gap between the piston and the door strap.

Above it has been assumed that the door strap is mounted to the chassis and the retainer to the door, but of course it could be as well the other way round, i.e. that the retainer is mounted to the chassis and the door strap to the door.

### Description of Drawings

In the following the invention will be described by way of example, without limitation of the general inventive concept, on examples of embodiment with reference to the drawings.
Figure 1 shows a cross section of a door check
Figure 2 shows a cross section of a second door check,
Figure 3 shows a cross section of a third door check.
Figure 4 shows a cross section of fourth door check.

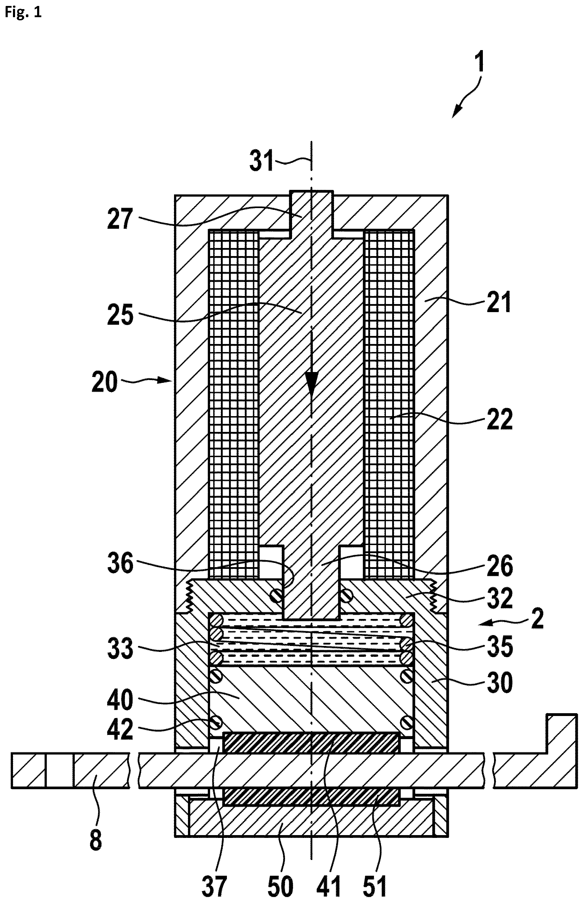

The door check 1 of Fig. 1 comprises a door strap 8 for being hinged to the chassis of a car and a retainer for being mounted to a car's door. The door strap 8 is movably supported by the retainer 2 between friction pads 41 and 51 being attached to a piston 40 and a retaining plate 50, as will be explained below in more detail.

The retainer 2 has a cylinder 30 with a cylinder axis 31, a bottom 32 and a cylinder opening 37 opposed to the bottom. A piston 40 is positioned inside the cylinder 30 and may be moved along the cylinder axis 31. The slit between the cylinder and the piston is preferably at least almost fluid tight, e.g. due to O-rings 42 or any other type of gasket. A spring 35 is positioned inside the cylinder 30 and forces the piston 40 towards the door strap. One end of the spring 35 abuts the cylinder bottom 32 and the other end abuts the piston 40; the piston 40 is thus spring loaded towards the door strap 8. Depending on the load of the spring 35, the door strap 8 is 'movably clamped' between the piston 40 and the retaining plate 50, or more precisely between the respective friction plates 41, 51, as well referred to as linings 41, 51. A movement of the door strap is thus possible, but only against a friction force.

The cylinder bottom 32 has a further opening 35 movably accommodating a plunger 26. The plunger 26 is a further piston and may be pushed into the cylinder or released. In case it is pushed into the cylinder 30, the fluid 33 inside the cylinder is compressed and accordingly the force applied by the piston 40 to the door strap 8 is augmented. Thus the friction is augmented. Depending on the pressure inside the cylinder 30, the friction enables to slow the door strap 8 down or even to clamp it tightly to thereby block the door.

A linear drive may be used to apply a force to the plunger 26, i.e. to push the plunger 26 through the further opening 36 into or towards the cylinder 30. In the depicted example, the actuator is a solenoid drive with a solenoid housing 21, a coil 22 and a movable armature 25. The armature 25 may be movably supported inside the coil 22. The coil axis and/or the armature's longitudinal axis may be parallel or as shown in the Figures 1 to 3 identical with cylinder axis 31. The armature 25 has two opposed narrow facing sides, from each of which extends a pin 26, 27. The pin 26 facing the cylinder 30 may be said plunger 26, as shown. Said plunger 26 may be supported by a linear bearing provided by the further opening 36 of the cylinder bottom. The opposite pin 27 may be supported by a further linear bearing being e.g. provided by a corresponding opening of the solenoid housing 21. Accordingly, the armature 25 is axially movable.

When applying a current to the coil 22 the magnetic force causes the armature 25 to push the plunger 26 towards the cylinder 30. The corresponding force augments the pressure inside the cylinder 30 and thus the force transmitted via the piston 40 to the door strap 8. This additional force enables to stop quickly or even prevent any movement of the door strap and thus the door at any position. For example: A car's door is opened and an obstacle limits the opening angle of the door. In this case a sensor may detect the obstacle and a controller controlling the current through the solenoid may augment the current to stop the door strap and thus the door well or at least just before it hits the obstacle.

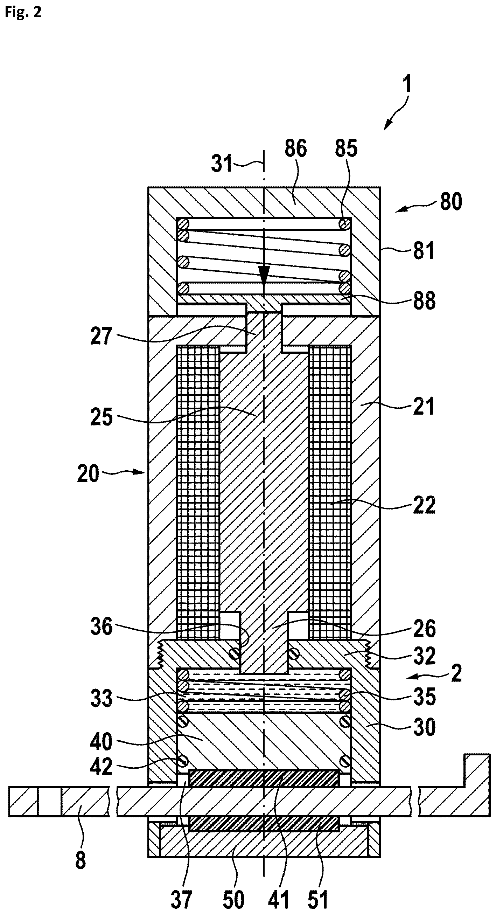

The door check of Fig. 2 is rather similar to the door check of Fig. 1, accordingly the same reference numerals are used for identical or similar details. The above description reads as well on the example of Fig. 2. To further enhance the force applied to the plunger 26, a booster 80 is attached to the linear drive 20. The booster 80 may comprise a booster housing 81 attached to the actuator housing 21. A coupling plate 88 is positioned inside the booster housing 81 on the pin 27 supporting a booster spring 85 being positioned between said coupling plate 88 and an abutment plate 86 of the booster housing 81. Preferably, the coupling plate 88 is of a magnetic material being attracted by the magnetic field of the coil 22 (if energized). The coupling plate 88, the pins 26, 27 and the armature may be formed as a single piece. The force of the booster spring 85 may be comparatively low, but it prevents the retainer from rattling, as rattling is unacceptable in automotive applications.

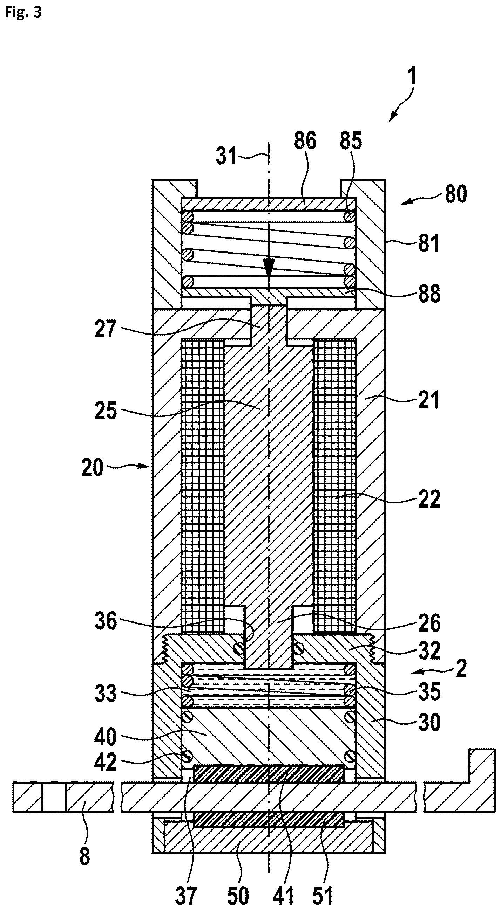

The example of Fig. 3 is an additional example of a door check with a booster 80. The above description of Fig. 2 applies as well to Fig. 3. The difference that the actuator housing 21 and the booster housing 80 are made of a single piece. To ease assembly, the abutment plate 86 is clamped into the booster housing's wall.

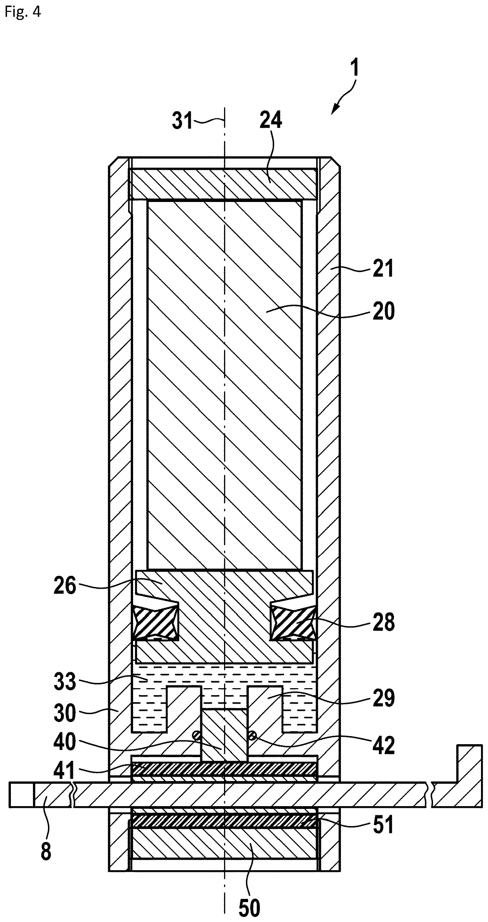

The example of Fig. 4 is again similar to the examples of Fig. 1 to Fig. 3 and similar or identical parts have the same reference numerals. The main difference is that a piezo actuator 20 is coupled to the plunger 26 for pressurizing the fluid 33 inside the cylinder 30. The actuator 20 is housed in a preferably cylindrical actuator housing 21. As can be seen in Fig. 4, the actuator housing 21 may be a retainer housing. Said housing 21 may accommodate the actuator 20, a plunger 26, a cylinder 30, a fluid 33 and the piston 40.

Similar to the examples of Fig. 1 to Fig. 3, the door strap 8 is movably supported by the retainer 2 between friction pads 41 and 51 being attached to a piston 40 and a retaining plate 50.

The housing 21 may be essentially tube like and may be closed at one side by a retaining member 24 and at the other side by a retaining plate 50. The retaining member 24 and the retaining plate 50, each have a thread engaging into a complementary thread of the housing 21. The actuator 20, the plunger 26, the cylinder volume, the fluid and the piston 40 may be arranged between the retaining member 24 and the retaining plate 50.

The retaining member 24 may be a retaining plate, a bolt or other type of screw. The retaining member 24 provides an adjustable thrust bearing or abutment for the actuator 20. Thus, an eventual wear of the door strap and/or the friction pads 41, 51 can be compensated by turning the retaining plate 50 and/or the retaining member 24.

The plunger 26 may be at the other side of the actuator 20. Said plunger 26 could as well be referred to as master piston as explained above in detail. The plunger 26 is movably supported in the housing 21, it may travel along the longitudinal axis 31. At least one gasket 28 may be provided to seal the slit between the housing 21 and the plunger 26. A movement of the plunger 26 is transferred via the fluid 33 to the piston 40. Said piston 40 may travel in a section 29 of the housing having a reduced diameter. Thus, by activation of the actuator 20, the plunger 26 may compress the liquid 33 and thereby press the piston 40 against door strap 8. In this example, the diameter of the plunger 26 and thus its effective surface *Aₚₗ* is much bigger than the diameter and the effective surface, respectively, of the piston 40 to thereby enhance the maximum traveling path of the piston 40.

Turning the retaining member 24 enables to position the actuator 20 and thus the plunger 26 in the housing 21. As any movement of the plunger 26 is transferred via the fluid 33 to the piston 40, the eventual gap between the piston 40 and the door strap 8 can be adjusted (or closed) by turning the retaining member 24. In particular, the piston 40 can be positioned to be in touch with the door strap 8 (assuming that optional friction pads are part of the piston and/or the door strap, respectively).

### List of reference numerals

- 1: door check
- 2: retainer
- 8: door strap
- 20: actuator e.g. linear drive
- 21: actuator housing
- 22: coil, e.g. solenoid
- 25: armature
- 24: retaining member
- 26: plunger/ pin / master piston
- 27: pin
- 28: gasket
- 29: section of housing with reduced diameter
- 30: cylinder
- 31: cylinder axis
- 32: cylinder bottom
- 33: cylinder volume / fluid
- 35: spring
- 36: further opening
- 37: cylinder opening
- 40: piston
- 41: lining / friction pad
- 42: O-ring / gasket
- 50: retaining plate
- 51: lining / friction pad
- 80: booster
- 81: booster housing
- 85: booster spring
- 86: abutment plate
- 88: coupling plate

## Claims

1. Door check (1) comprising at least a door strap (8) for being movably mounted to a vehicle chassis and a retainer (2) for being be mounted to a vehicle door, wherein the retainer (2)
- movably supports the door strap (8) and enables a movement of the door strap relative to the retainer (2) along the longitudinal axis of the door strap,
- comprises at least a cylinder (30) with a cylinder axis (31), a cylinder bottom (32) and an opposed cylinder opening (37), said cylinder (30) accommodating a piston (40), said piston (40) being movably along the cylinder axis (31) and being spring loaded to transmit a force to the door strap (8) thereby creating a frictional force opposite to a movement of the door strap (8),
**characterized in that**
a controllable actuator is coupled by coupling means (26, 33, 36) to the piston (40) enabling to increase the force exerted via the piston (40) to the door strap (8).

2. The door check of claim 1,
**characterized in that**
a spring (35) is positioned in the cylinder (30) between the cylinder bottom (32) and the piston (40), said spring (35) loading the piston (40) towards the door strap (8).

3. The door check of claim 2,
**characterized in that**
the coupling means (26, 33, 36) bypass the spring (35).

4. The door check one of claims 1 to 3,
**characterized in that**
the cylinder (30) has a further opening (36) receiving a plunger (26) being coupled to the actuator and/or being spring loaded to pressurize a fluid in the cylinder (30).

5. The door check of one of claims 1 to 4,
**characterized in that**
the volume between the cylinder bottom and the piston is filled with a fluid (33) and **in that** activation of the actuator augments and/or reduces the fluid pressure, thereby augmenting and/or reducing, respectively, the force via the piston (40) to the door strap (8).

6. The door check of one of claims 1 to 5,
**characterized in that**
the actuator comprises a coil (22) and a movable armature (25) wherein a current through said coil (22) exerts a force on the armature (25) which is transmitted by said coupling means to the piston (40).

7. The door check of claim 6 and 4,
**characterized in that**
the armature (25) is coupled to the plunger (26).

8. The door check of claims 6 and 4 or 7,
**characterized in that**
the plunger (26) is a protrusion of the armature (25).

9. The door check of claim 8,
**characterized in that**
the further opening (36) and the plunger (26) provide a bearing for the armature (25).

10. The door check of one of claims 6 to 9
**characterized in that**
a preferably magnetic coupling plate (88) is positioned at the end of the armature (25) facing away from the piston.

11. The door check of one of claim 10
**characterized in that**
said coupling plate (88) extends over the coil's respective front facing side.

12. The door check of claim 10 or 11,
**characterized in that**
a booster spring (85) is positioned inside a booster housing (81) between said coupling plate (88) and an abutment plate (86) of the booster housing (81).

13. The door check of claim 12
**characterized in that**
the abutment plate (88) is releasable connected to the booster housing (21).

## Patentansprüche

1. Türfeststeller (1) aufweisend mindestens ein Türband (8) zur beweglichen Anbringung an einem Fahrzeugchassis und einen Halter (2) zur Anbringung an einer Fahrzeugtür, wobei der Halter (2),
- das Türband (8) beweglich lagert und eine Bewegung des Türbandes relativ zum Halter (2) entlang der Längsachse des Türbandes ermöglicht,
- mindestens einen Zylinder (30) mit einer Zylinderachse (31), einem Zylinderboden (32) und einer gegenüberliegende Zylinderöffnung (37) aufweist, wobei der Zylinder (30) einen Kolben (40) aufnimmt, wobei der Kolben (40) entlang der Zylinderachse (31) beweglich ist und federbelastet ist, um dadurch eine Kraft auf das Türband (8) zu übertragen, wodurch eine Reibungskraft entgegengesetzt zu einer Bewegung des Türbandes (8) erzeugt wird,
**dadurch gekennzeichnet, dass**
ein steuerbares Stellglied durch Kopplungsmittel (26, 33, 36) mit dem Kolben (40) gekoppelt ist, um eine Erhöhung der über den Kolben (40) auf das Türband (8) ausgeübten Kraft zu ermöglichen.

2. Türfeststeller (1) nach Anspruch 1,
**dadurch gekennzeichnet, dass**
eine Feder (35) in dem Zylinder (30) zwischen dem Zylinderboden (32) und dem Kolben (40) angeordnet ist, wobei die Feder (35) den Kolben (40) in Richtung Türbandes (8) belastet.

3. Türfeststeller nach Anspruch 2,
**dadurch gekennzeichnet, dass**
die Kupplungsmittel (26, 33, 36) die Feder (35) überbrücken.

4. Türfeststeller nach einem der Ansprüche 1 bis 3,
**dadurch gekennzeichnet, dass**
der Zylinder (30) eine weitere Öffnung (36) aufweist, die einen Stößel (26) aufnimmt, der mit dem Stellglied gekoppelt ist und/oder federbelastet ist, um ein Fluid im Zylinder unter Druck zu setzen (30).

5. Türfeststeller nach einem der Ansprüche 1 bis 4,
**dadurch gekennzeichnet, dass**
das Volumen zwischen dem Zylinderboden und dem Kolben mit einem Fluid (33) gefüllt ist und dass die Betätigung des Stellglieds den Fluiddruck erhöht und/oder verringert, wodurch entsprechend die Kraft über den Kolben (40) auf das Türband (8) erhöht und/oder verringert wird.

6. Türfeststeller nach einem der Ansprüche 1 bis 5,
**dadurch gekennzeichnet, dass**
das Stellglied eine Spule (22) und einen beweglichen Anker (25) aufweist, wobei ein Strom durch die Spule (22) eine Kraft auf den Anker (25) ausübt, die durch die Kopplungseinrichtung auf den Kolben (40) übertragen wird.

7. Türfeststeller nach Anspruch 6 und 4,
**dadurch gekennzeichnet, dass**
der Anker (25) mit dem Stößel (26) gekoppelt ist.

8. Türfeststeller nach den Ansprüchen 6 und 4 oder 7,
**dadurch gekennzeichnet, dass**
der Stößel (26) ein Vorsprung des Ankers (25) ist.

9. Türfeststeller nach Anspruch 8,
**dadurch gekennzeichnet, dass**
die weitere Öffnung (36) und der Stößel (26) eine Lagerung für den Anker (25) bilden.

10. Türfeststeller nach einem der Ansprüche 6 bis 9,
**dadurch gekennzeichnet, dass**
an dem vom Kolben abgewandten Ende des Ankers (25) eine vorzugsweise magnetische Kopplungsplatte (88) angeordnet ist.

11. Türfeststeller nach Anspruch 10,
**dadurch gekennzeichnet, dass**
die Kopplungsplatte (88) sich über die jeweilige nach vorne weisende Seite der Spule erstreckt.

12. Türfeststeller nach Anspruch 10 oder 11,
**dadurch gekennzeichnet, dass**
eine Verstärkerfeder (85) in einem Verstärkergehäuse (81) zwischen der Kopplungsplatte (88) und einer Widerlagerplatte (86) des Verstärkergehäuses (81) angeordnet ist.

13. Türfeststeller nach Anspruch 12,
**dadurch gekennzeichnet, dass**
die Widerlagerplatte (88) lösbar mit dem Verstärkergehäuse (21) verbunden ist.

## Revendications

1. Arrêt-porte (1) comprenant au moins une courroie de porte (8) qui peut être montée de façon mobile sur un châssis de véhicule et un dispositif de retenue (2) qui peut être monté sur une porte de véhicule, lequel dispositif de retenue (2)
- supporte de façon mobile la courroie de porte (8) et permet un mouvement de la courroie de porte par rapport au dispositif de retenue (2) sur l'axe longitudinal de la courroie de porte,
- comprend au moins un cylindre (30) avec un axe de cylindre (31), un fond de cylindre (32) et une ouverture de cylindre (37) opposée, ledit cylindre (30) recevant un piston (40), lequel piston (40) est mobile le long de l'axe de cylindre (31) et contraint par ressort pour transmettre une force à la courroie de porte (8) en créant ainsi une force de friction qui s'oppose à un mouvement de la courroie de porte (8),
**caractérisé en ce qu'**un actionneur contrôlable est couplé au piston (40) par des moyens de couplage (26, 33, 36) et permet d'augmenter la force exercée par le piston (40) sur la courroie de porte (8).

2. Arrêt-porte selon la revendication 1, **caractérisé en ce qu'**un ressort (35) est positionné dans le cylindre (30) entre le fond de cylindre (32) et le piston (40), lequel ressort (35) contraint le piston (40) vers la courroie de porte (8).

3. Arrêt-porte selon la revendication 2, **caractérisé en ce que** les moyens de couplage (26, 33, 36) contournent le ressort (35).

4. Arrêt-porte selon l'une des revendications 1 à 3, **caractérisé en ce que** le cylindre (30) possède une autre ouverture (36) qui reçoit un poussoir (26) couplé à l'actionneur et/ou contraint par ressort pour pressuriser un fluide dans le cylindre (30).

5. Arrêt-porte selon l'une des revendications 1 à 4, **caractérisé en ce que** le volume formé entre le fond de cylindre et le piston est rempli d'un fluide (33) et **en ce que** l'activation de l'actionneur augmente et/ou réduit la pression du fluide, ce qui augmente et/ou réduit, respectivement, la force exercée par le piston (40) sur la courroie de porte (8).

6. Arrêt-porte selon l'une des revendications 1 à 5, **caractérisé en ce que** l'actionneur comprend une bobine (22) et une armature mobile (25), un courant qui traverse ladite bobine (22) exerçant une force sur l'armature (25) qui est transmise au piston (40) par lesdits moyens de couplage.

7. Arrêt-porte selon les revendications 6 et 4, **caractérisé en ce que** l'armature (25) est couplée au poussoir (26).

8. Arrêt-porte selon les revendications 6 et 4 ou 7, **caractérisé en ce que** le poussoir (26) est une saillie de l'armature (25).

9. Arrêt-porte selon la revendication 8, **caractérisé en ce que** l'autre ouverture (36) et le poussoir (26) forment un palier pour l'armature (25).

10. Arrêt-porte selon l'une des revendications 6 à 9, **caractérisé en ce qu'**une plaque de couplage (88), de préférence magnétique, est placée à l'extrémité de l'armature (25) tournée à l'opposé du piston.

11. Arrêt-porte selon la revendication 10, **caractérisé en ce que** ladite plaque de couplage (88) s'étend par-dessus le côté correspondant de la bobine tourné vers l'avant.

12. Arrêt-porte selon la revendication 10 ou 11, **caractérisé en ce qu'**un ressort auxiliaire (85) est placé à l'intérieur d'un boîtier auxiliaire (81) entre ladite plaque de couplage (88) et une plaque de butée (86) du boîtier auxiliaire (81).

13. Arrêt-porte selon la revendication 12 **caractérisé en ce que** la plaque de butée (88) est reliée d'une façon pouvant être défaite au boîtier auxiliaire (21).
